# EUROPEAN PATENT APPLICATION

(11) **EP 4 844 458 A1**
(43) Date of publication of application: **25.11.2026**
(21) Application number: 25774851.7
(22) Date of filing: 13.02.2025
(51) Int. Cl.: G02B 6/00, G02B 27/01, G02B 5/18

(54) **WAVEGUIDE AND ELECTRONIC DEVICE EMPLOYING SAME**

(30) Priority: 19.03.2024 KR 20240037912
(71) Applicant: Samsung Electronics Co., Ltd., Suwon-si, Gyeonggi-do 16677 (KR); POSTECH Research and Business Development Foundation, Pohang-si, Gyeongsangbuk-do 37673 (KR)
(72) Inventor: MOON, Seokil, Suwon-si, Gyeonggi-do 16677 (KR); RHO, Junsuk, Suwon-si, Gyeonggi-do 16677 (KR); KIM, Seokwoo, Suwon-si, Gyeonggi-do 16677 (KR); KIM, Joohoon, Suwon-si, Gyeonggi-do 16677 (KR)
(74) Representative: Gulde & Partner
(86) International application number: PCT/KR2025/002102
(87) International publication number: WO 2025/198188

(57) **Abstract**

Provided is a method comprising the steps of: by using a single optical element in which nanostructures are arranged on a two-dimensional plane, with a first period, obtaining diffraction paths in which first light and second light travel, respectively, by diffracting the first light and the second light which are incident on the optical element at the same angle, into a plurality of paths; determining, on the basis of the diffraction paths, a traveling angle at which the first light and the second light are diffracted in the same direction and travel; obtaining a plurality of combinations consisting of the first period, the traveling angle, the wavelength of the first light, and the wavelength of the second light; obtaining diffraction efficiencies of the first light and the second light respectively corresponding to the plurality of obtained combinations; and updating the structure of the optical element on the basis of the obtained diffraction efficiencies.

## Description

### Technical Field

The present disclosure relates to a waveguide for miniaturizing an apparatus and an electronic apparatus employing the same. In particular, the present disclosure relates to an electronic apparatus for providing light of an image to a user by using a single waveguide.

### Background Art

An augmented reality device is an apparatus allowing viewing augmented reality (AR), and examples thereof include AR glasses. An image optical system of an augmented reality apparatus includes a component configured to generate an image and a waveguide configured to deliver the generated image to the eyes of a user. Such AR devices are required to have a wide field of view and display high-quality images, and there have been demands for lightweight and miniaturized AR devices.

Recently, optical systems based on waveguides for AR devices such as AR glasses have been researched and developed. Light is input to a waveguide of the related art by using free-form surface reflection or multi-mirror reflection or by using an input-coupling diffractive element such as a diffractive optical element or a holographic optical element. When free-form surface reflection or multi-mirror reflection of the related art is used, a structure may be simple and light transfer efficiency may be high, but there are limitations in the field of view and difficulties in thinning the waveguide. When an input-coupling diffractive element of the related art is used, thinning of the waveguide is relatively easy, but only first-order diffracted light is used in the input-coupling diffractive element, which results in low light transfer efficiency. In addition, because light is required to be guided through a separate substrate for each of three primary colors of light (red, green, blue (RGB)), there have been difficulties in thinning the waveguide.

### Disclosure of Invention

### Solution to Problem

A method according to an embodiment of the present disclosure includes obtaining, by using an optical element in which nanostructures are positioned on a two-dimensional plane according to a first period, diffraction paths in which first light and second light respectively travel by diffracting the first light and the second light at a same angle into a plurality of paths, the first light and the second light being incident on the optical element. The method includes determining, based on the diffraction paths, a traveling angle at which the first light and the second light are diffracted and travel in a same direction. The method includes obtaining a plurality of combinations including the first period, the traveling angle, a wavelength of the first light, and a wavelength of the second light. The method includes obtaining diffraction efficiencies of the first light and the second light respectively corresponding to the plurality of obtained combinations. The method includes updating a structure of the optical element based on the obtained diffraction efficiencies.

An electronic apparatus according to an embodiment of the present disclosure includes memory storing one or more instructions. The electronic apparatus includes at least one processor configured to execute the one or more instructions stored in the memory. The electronic apparatus includes a waveguide including a substrate configured to guide a plurality of lights. The electronic apparatus includes an input-coupling element positioned on the substrate and configured to allow external light to be incident onto the substrate. The electronic apparatus includes an output-coupling element positioned on the substrate and configured to allow the external light to be output from the substrate. At least one of the input-coupling element and the output-coupling element includes an optical element, the optical element being configured such that nanostructures are positioned on a two-dimensional plane according to a first period and being configured to diffract first light and second light into a plurality of paths, the first light and the second light being incident at a same angle. The at least one processor may be configured to execute the one or more instructions to obtain, by using the optical element, diffraction paths in which the first light and the second light respectively travel. The at least one processor may be configured to determine, based on the diffraction paths, a traveling angle at which the first light and the second light are diffracted and travel in a same direction. The at least one processor may be configured to obtain a plurality of combinations including the first period, the traveling angle, a wavelength of the first light, and a wavelength of the second light. The at least one processor may be configured to obtain diffraction efficiencies of the first light and the second light respectively corresponding to the plurality of obtained combinations. The at least one processor may be configured to update a structure of the optical element based on the obtained diffraction efficiencies.

Provided is a computer-readable recording medium having recorded thereon a program for executing, on a computer, a method according to an embodiment of the present disclosure.

### Brief Description of Drawings

The present disclosure may be readily understood by reference to the following detailed description in conjunction with the accompanying drawings, wherein reference numerals refer to structural elements.
FIG. 1 is a diagram illustrating a state in which a single waveguide diffracts a plurality of lights into a plurality of paths, according to an embodiment of the present disclosure.
FIG. 2 is a conceptual diagram illustrating a state in which a plurality of lights, which are diffracted and then travel in the same direction, travel along a waveguide, according to an embodiment.
FIG. 3 is a conceptual diagram for explaining an optical element according to an embodiment of the present disclosure.
FIG. 4 is a conceptual diagram for explaining in detail the design of nanostructures in an optical element, according to an embodiment of the present disclosure.
FIG. 5 is a flowchart for explaining a method of designing a single optical element for guiding light, according to an embodiment of the present disclosure.
FIG. 6 is a flowchart for explaining an algorithm for optimizing a single optical element for guiding light, according to an embodiment of the present disclosure.
FIG. 7 is a flowchart for explaining a method of securing robustness to optimize an optical element, according to an embodiment of the present disclosure.
FIG. 8 is a schematic diagram of an electronic apparatus including an optical element, according to an embodiment of the present disclosure.
FIG. 9 is a schematic diagram of AR glasses including an optical element, according to an embodiment of the present disclosure.

### Mode for the Invention

All terms used in embodiments of the present specification are those general terms currently widely used in the art in consideration of functions in regard to the present disclosure, but the terms may vary according to the intention of those of ordinary skill in the art, precedents, or new technologies in the art. Also, some terms may be arbitrarily selected by the applicant, and in this case, the meaning of the selected terms will be described in detail in the detailed description of the embodiments. Thus, the terms used in the present specification should be understood not as simple names but based on the meaning of the terms and the overall description of the present disclosure.

The singular forms "a", "an", and "the" may be intended to include the plural forms as well, unless the context clearly indicates otherwise. The terms used herein, including technical or scientific terms, may have the same meanings as those generally understood by those of ordinary skill in the art described in the present disclosure.

Throughout the present disclosure, when a portion "includes" or "comprises" a component, another component may be further included, rather than excluding the presence of the other component, unless otherwise described. In addition, the terms such as "...or/er", "...module", or the like used in the present specification refer to units that perform at least one function or operation, and the units may be implemented as hardware or software or as a combination of hardware and software.

The expression "configured (or set) to" as used herein may be interchangeably used with "suitable for", "having the capacity to", "designed to", "adapted to", "made to", or "capable of" according to the given situation. The expression "configured (or set) to" may not necessarily mean "specifically designed to" in terms of hardware. Alternatively, in some situations, the expression "a system configured to" may refer to a system that "can" operate together with another apparatus or components. For example, the phrase "a processor configured (or set) to perform A, B, and C" may refer to a dedicated processor (e.g., an embedded processor) for performing A, B, and C, or a generalpurpose processor (e.g., a central processing unit (CPU) or an application processor) that may perform A, B, and C by executing one or more software programs stored in memory.

Also, throughout the present disclosure, when a component is referred to as being "connected" or "joined" to another component, the component may be directly connected or joined to the other component, but unless otherwise described, it should be understood that the components may be connected or joined by means of another component therebetween.

Hereinafter, the embodiments of the present disclosure will be described in detail with reference to the accompanying drawings such that one of ordinary skill in the art may easily implement the embodiments of the present disclosure. The present disclosure may, however, be embodied in many different forms and should not be construed as limited to the embodiments of the present disclosure set forth herein.

The embodiments of the present disclosure will now be described in detail with reference to accompanying drawings.

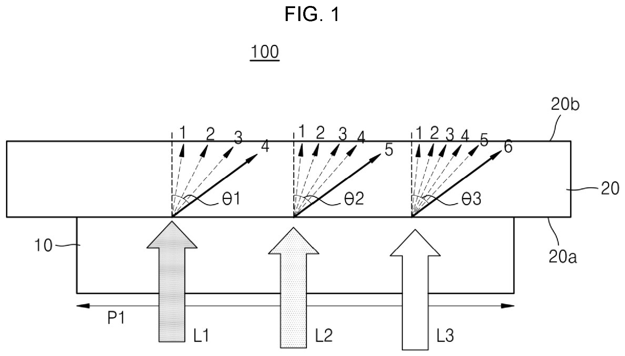

FIG. 1 is a diagram illustrating a state in which a single waveguide diffracts a plurality of lights into a plurality of paths, according to an embodiment of the present disclosure.

Referring to FIG. 1, in an embodiment, an electronic apparatus may include an apparatus for providing images to a user. The electronic apparatus may include a waveguide 100 configured to guide light of an image in an intended direction. The electronic apparatus may output light of an image toward the user by using the waveguide 100. The waveguide 100 may be provided for each of the left eye and the right eye corresponding to a display portion, or may be provided for only one of both eyes.

For reference, FIG. 1 is a diagram mainly illustrating an optical element 10 configured to diffract first light L1, second light L2, and third light L3 into a plurality of paths to explain the principle for guiding light of an image in an intended direction.

In an embodiment, the waveguide 100 may include a substrate 20 and the optical element 10.

The substrate 20 is configured to transmit light of a virtual image generated by the display portion to a pupil of the user. The substrate 20 may have a flat plate shape. The substrate 20 may be formed as a single-layer structure in which light may propagate while being reflected internally.

For example, the substrate 20 may be formed as a single-layer structure of a transparent material. In this case, the transparent material refers to a material through which light in a visible light band may pass, the transparency thereof may not be 100 %, and the transparent material may have a certain color. Because the substrate 20 includes a transparent material, the substrate 20 is configured to allow light of an external scene to pass therethrough and be transmitted to the pupil of the user. The user may view not only virtual images but also real scenes through the electronic apparatus, and thus, the electronic apparatus may implement augmented reality.

As another example, the substrate 20 may have a single-layer structure of an opaque material. Because the substrate 20 includes an opaque material, the substrate 20 is configured to block light of an external scene. The user may view a virtual image through the light of the virtual image guided through the substrate 20. The electronic apparatus may acquire light of an external scene through an image sensor and output the light of the external scene and the light of the virtual image together from the display portion, thereby implementing augmented reality.

The optical element 10 may be positioned on the substrate 20. The optical element 10 may include an optical element configured to diffract incident light to travel in a plurality of paths. For example, the optical element 10 may include a diffractive element configured to diffract incident light. The diffractive element may be implemented as a diffractive optical element (DOE), a holographic optical element (HOE), a polymer dispersed liquid crystal (PDLC), a metasurface, or the like.

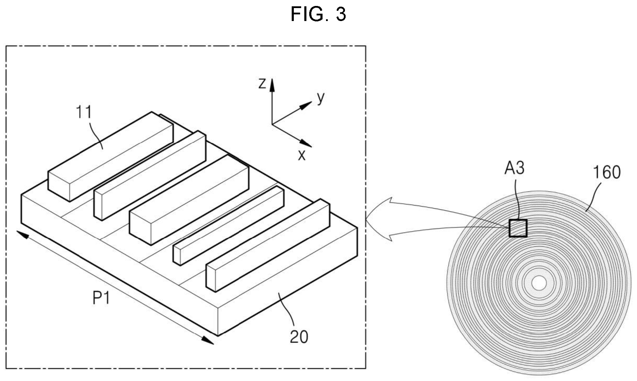

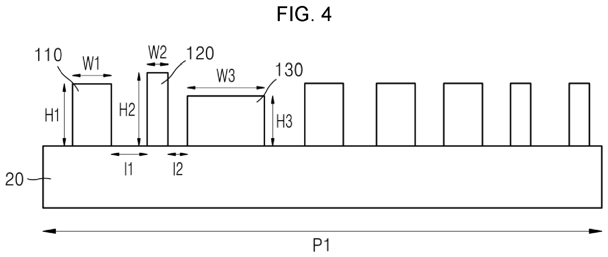

In an embodiment, the optical element 10 may include a structure in which nanostructures are periodically and repeatedly installed on a two-dimensional plane. In the present disclosure, a period at which the nanostructures are installed may be expressed as a first period P1. The nanostructures in the optical element 10 will be described in detail with reference to FIGS. 3 and 4. In addition, FIG. 1 merely illustrates only an area of the first period P1 of the optical element 10 for convenience of description, and the optical element 10 may include a flat plate wider than the first period P1.

The optical element 10 may be positioned on one side 20a of the substrate 20. In FIG. 1, a plurality of lights are illustrated as being diffracted by the optical element 10 and passing through the optical element 10 to travel into the substrate 20, but the technical concept of the present disclosure is not limited thereto. For example, the optical element 10 may be positioned on the other side 20b of the substrate 20. The plurality of lights may be incident on the one side 20a of the substrate 20 and diffracted by the optical element 10 positioned on the other side 20b, and may be reflected by the optical element 10 to travel into the substrate 20.

In an embodiment, the electronic apparatus may cause the first light L1, the second light L2, and the third light L3 to travel in set paths through the waveguide 100, and may provide an image or video to the user through the first light L1, the second light L2, and the third light L3. The combination of the first light L1, the second light L2, and the third light L3 may be light of an image output through the display portion of the electronic apparatus.

In an embodiment, the first light L1, the second light L2, and the third light L3 may include three primary colors of light (red, green, blue (RGB)). For example, the first light L1 may be red light, the second light L2 may be green light, and the third light L3 may be blue light.

In an embodiment, the first light L1, the second light L2, and the third light L3 may be incident toward the optical element 10. The first light L1, the second light L2, and the third light L3 may each be diffracted by the optical element 10 and then pass through the optical element 10 to travel. The first light L1, the second light L2, and the third light L3 may travel into the substrate 20.

In an embodiment, the first light L1 may be incident toward the optical element 10. The first light L1 may be diffracted by the optical element 10. The first light L1 may pass through the optical element 10 and travel into the substrate 20. The first light L1 may be diffracted by the optical element 10 to travel in a first path 1, a second path 2, a third path 3, and a fourth path 4.

Light of a first diffraction order generated by the first light L1 being diffracted by the optical element 10 may travel in the first path 1. Light of a second diffraction order generated by the first light L1 being diffracted by the optical element 10 may travel in the second path 2. Light of a third diffraction order generated by the first light L1 being diffracted by the optical element 10 may travel in the third path 3. Light of a fourth diffraction order generated by the first light L1 being diffracted by the optical element 10 may travel in the fourth path 4. The diffraction order of the first light generated by the optical element 10 does not limit the technical concept of the present disclosure, and for convenience of description, the generation of the light of the fourth diffraction order will be described as an example.

A path of light diffracted by the optical element 10 may be determined according to Equation 1. However, Equation 1 is merely an example equation for illustrative purposes, and more specific equations may be used, and the technical concept of the present disclosure is not limited thereto. [Equation 1] $Λsinθ = mλ$

In Equation 1, Λ may refer to a period at which nanostructures in the optical element 10 are repeatedly positioned. The unit of Λ may be a distance. For example, a first period P1 (period 1) illustrated in FIG. 1 may be substituted for Λ.

In Equation 1, Θ may refer to a refraction angle of light after the light has been diffracted by the optical element 10. Θ may be calculated as an angle at which light is refracted with respect to a normal vector of an incident surface on which the light is incident.

For example, the first light L1 may be incident on the optical element 10. The incident first light L1 may be diffracted and travel in the first path 1, the second path 2, the third path 3, and the fourth path 4 according to the diffraction order. For light of a fourth diffraction order in which the first light L1 is diffracted and travels in the fourth path 4, Θ may be a first angle (θ1).

In Equation 1, m may be an integer. m may be one of all integers satisfying the conditions of Equation 1. Specifically, because the value of sin Θ ranges from -1 to 1, the value of m may be specified. Because the number of possible values of Θ is determined by the number of possible values of m, the number of paths of light diffracted by the optical element 10 is determined.

In Equation 1, λ may refer to a wavelength of light incident on the optical element 10. For example, the first light L1 may be incident on the optical element 10. A wavelength of the first light L1 may be substituted for λ.

In an embodiment, the first light L1 may be incident toward the optical element 10. The first light L1 may be diffracted by the optical element 10, and the maximum diffraction order may be determined according to the number of possible values of m. [Equation 2] $\frac{Λsinθ}{λ} = m$

For example, when Equation 1 is modified as in Equation 2, because sinθ has a value greater than -1 and less than 1, m may be an integer greater than $- \frac{Λ}{λ}$ and less than $\frac{Λ}{λ}$. Accordingly, m, that is, the maximum diffraction order of light incident on the optical element 10, may be determined according to a ratio of the period at which nanostructures in the optical element 10 are repeatedly positioned to the wavelength of light incident on the optical element 10.

For example, the first light L1 may be diffracted by the optical element 10, and light of a fourth diffraction order may be generated. A diffraction angle of the light of the fourth diffraction order generated by the first light L1 being diffracted by the optical element 10 may be a first angle (θ1).

In an embodiment, the period at which nanostructures in the optical element 10 are repeatedly positioned may be greater than the wavelength of light incident on the optical element 10. The first period P1 may be greater than each of the wavelength of the first light L1, a wavelength of the second light L2, and a wavelength of the third light L3.

In an embodiment, lights of respective diffraction orders after the first light L1 is diffracted by the optical element 10 may each have a diffraction efficiency. For example, a diffraction efficiency of light of a first diffraction order traveling in the first path 1 after the first light L1 is diffracted by the optical element 10 and a diffraction efficiency of light of a second diffraction order traveling in the second path 2 after the first light L1 is diffracted by the optical element 10 may differ from each other.

For reference, for convenience of description, the description of the diffraction of the second light L2 and the third light L3 overlaps with the description using the first light L1 and will thus be simplified or omitted.

In an embodiment, the second light L2 may be diffracted by the optical element 10, and light of a fifth diffraction order may be generated. A diffraction angle of light of a fifth diffraction order generated by the second light L2 being diffracted by the optical element 10 may be a second angle (θ2). In an embodiment, lights of respective diffraction orders after the second light L2 is diffracted by the optical element 10 may each have a diffraction efficiency.

In an embodiment, the third light L3 may be diffracted by the optical element 10, and light of a sixth diffraction order may be generated. A diffraction angle of light of a sixth diffraction order generated by the third light L3 being diffracted by the optical element 10 may be a third angle (θ3). In an embodiment, lights of respective diffraction orders after the third light L3 is diffracted by the optical element 10 may each have a diffraction efficiency.

In an embodiment, the first angle (θ1), the second angle (θ2), and the third angle (θ3) may be the same. The light of the fourth diffraction order generated by the first light L1 being diffracted by the optical element 10, the light of the fifth diffraction order generated by the second light L2 being diffracted by the optical element 10, and the light of the sixth diffraction order generated by the third light L3 being diffracted by the optical element 10 may travel in the same direction into the substrate 20. Each diffraction order is merely an example and does not limit the technical concept of the present disclosure.

The electronic apparatus according to an embodiment may transmit light of a virtual image based on light of diffraction orders in which the first light L1, the second light L2, and the third light L3 are diffracted by a single optical element 10 and then travel in the same direction. The electronic apparatus may provide a virtual image to the user through the transmitted light of the virtual image. The electronic apparatus may implement augmented reality.

In an embodiment, among lights of respective diffraction orders after the first light L1 is diffracted by the optical element 10, the light of the fourth diffraction order may have the highest diffraction efficiency. Among lights of respective diffraction orders after the second light L2 is diffracted by the optical element 10, the light of the fifth diffraction order may have the highest diffraction efficiency. Among lights of respective diffraction orders after the third light L3 is diffracted by the optical element 10, the light of the sixth diffraction order may have the highest diffraction efficiency. Lights of respective diffraction orders in which the first light L1, the second light L2, and the third light L3 are diffracted by the optical element 10 and then travel in the same direction may each have the highest diffraction efficiency.

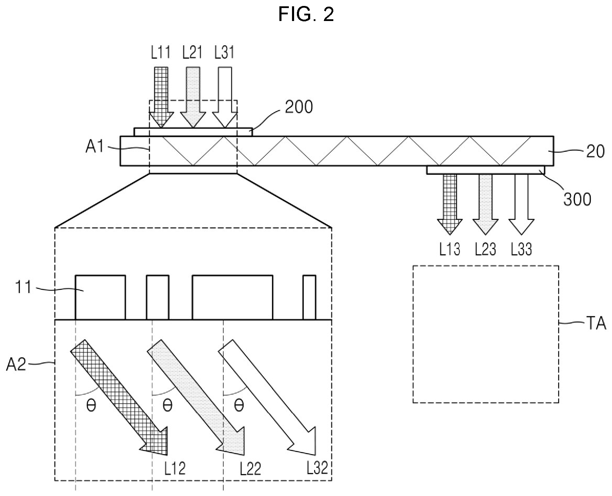

FIG. 2 is a conceptual diagram illustrating a state in which a plurality of lights, which are diffracted and then travel in the same direction, travel along a waveguide, according to an embodiment.

For convenience of description, descriptions overlapping with those described with reference to FIG. 1 will be simplified or omitted. In FIG. 2, for convenience of description, first light is indicated in detail as L11, L12, and L13, second light as L21, L22, and L23, and third light as L31, L32, and L33.

Referring to FIG. 2, in an embodiment, the waveguide may include an input-coupling element 200, the substrate 20, and an output-coupling element 300. The electronic apparatus may transmit incident light to a target area TA by using the waveguide. The electronic apparatus may provide light of a virtual image, output from a display portion, to a user by using the waveguide.

In an embodiment, the input-coupling element 200 may be positioned on a first surface of the substrate 20. The input-coupling element 200 may be formed by being attached to or coated on the first surface of the substrate 20.

In an embodiment, the input-coupling element 200 may be configured to propagate incident light into the substrate 20 by diffracting the incident light. The input-coupling element 200 may include a meta element configured to propagate at least one of the incident first light L11, second light L21, and third light L31 into the substrate 20. The meta element is an element having a metasurface structured in a pattern smaller than a wavelength band of incident light (i.e., sub-wavelength), and may include, for example, a metagrating or a metalens having a pattern with a size smaller than the wavelength band of incident light, but is not limited thereto.

In an embodiment, a period of the pattern of the meta element may be greater than the wavelength band of the incident light. The input-coupling element 200 may be configured as the optical element 10 illustrated in FIG. 1.

As another example, the input-coupling element 200 may be formed by being attached to or coated on a second surface of the substrate 20. The second surface may be a surface opposite to the first surface among two surfaces of the substrate 20.

For reference, an enlarged first area A1 may be expressed as a second area A2. The structure of the input-coupling element 200 as the optical element 10 (see FIG. 1) and directions in which the first light L12, second light L22, and third light L32 propagate inside the substrate 20 will be described using the second area A2.

In an embodiment, the input-coupling element 200 may include a meta element. The input-coupling element 200 may be a combination of a plurality of nanostructures 11 positioned on the substrate 20. The input-coupling element 200 may diversify a diffraction order of incident light entering an optical system or diffract the incident light at various angles according to the arrangement shape of the plurality of nanostructures 11.

In this case, the "arrangement shape" may refer to at least one of the size, shape, and arrangement spacing of each of the plurality of nanostructures 11, and the size distribution by position, shape distribution by position, and spacing distribution by position of the plurality of nanostructures 11 with respect to an area in which the meta element is positioned. The detailed arrangement shape of the plurality of nanostructures 11 included in the input-coupling element 200 may vary according to the optical performance required for the input-coupling element 200. For example, the arrangement shape of the nanostructures may vary according to a wavelength band of light to be diffracted through the input-coupling element 200, and the arrangement shape of the nanostructures may vary such that a diffraction order and diffraction efficiency of light after being diffracted through the input-coupling element 200 are optimized.

In an embodiment, the output-coupling element 300 may be positioned on the second surface of the substrate 20. The output-coupling element 300 may be formed by being attached to or coated on the second surface of the substrate 20.

In an embodiment, the output-coupling element 300 may be configured to diffract light propagating inside the substrate 20 and output the light propagating inside the substrate 20 to the outside of the substrate 20. The output-coupling element 300 may include a meta element configured to output at least one of the first light L12, the second light L22, and the third light L32, which are propagated into the substrate 20, to the outside of the substrate 20. The meta element is an element having a metasurface structured in a pattern smaller than a wavelength band of incident light (i.e., sub-wavelength), and may include, for example, a metagrating or a metalens having a pattern with a size smaller than the wavelength band of incident light, but is not limited thereto.

In an embodiment, a period of the pattern of the meta element may be greater than the wavelength band of the incident light. The output-coupling element 300 may be configured as the optical element 10 illustrated in FIG. 1.

In an embodiment, the first light L12 may be diffracted by the input-coupling element 200 and propagated into the substrate 20. The first light L12 incident perpendicularly to an incident surface of the input-coupling element 200 may be diffracted at a certain angle (Θ) and propagated into the substrate 20.

In an embodiment, the second light L22 and the third light L32 may also be diffracted at a certain angle (Θ) and propagated into the substrate 20. The input-coupling element 200 may equally diffract the incident first light L11, second light L21, and third light L31 at a certain angle (Θ) and propagate same into the substrate 20.

In an embodiment, the substrate 20 may be formed in a structure in which light may propagate while being reflected internally. The first light L12, the second light L22, and the third light L32, which are propagated into the substrate 20 at a certain angle (Θ), may propagate while being reflected inside the substrate 20.

In an embodiment, the first light L13 may be diffracted by the output-coupling element 300 and propagated to the outside of the substrate 20. The first light L13 may be diffracted by the output-coupling element 300 and output to the target area TA. The second light L23 may be diffracted by the output-coupling element 300 and output to the target area TA. The third light L33 may be diffracted by the output-coupling element 300 and output to the target area TA.

Specifically, the first light L11 may be diffracted by the input-coupling element 200 and travel in a plurality of paths. Among the plurality of paths in which the first light L11 travels after being diffracted, for example, light of a fourth diffraction order may travel at a certain angle (Θ). Similarly, among a plurality of paths in which the second light L21 travels after being diffracted, for example, light of a fifth diffraction order may travel at a certain angle (Θ). Among a plurality of paths in which the third light L31 travels after being diffracted, for example, light of a sixth diffraction order may travel at a certain angle (Θ).

For example, the light of the fourth diffraction order of the first light L11, the light of the fifth diffraction order of the second light L21, and the light of the sixth diffraction order of the third light L31 may propagate in the same direction into the substrate 20 and may be diffracted by the output-coupling element 300 to propagate to the outside of the substrate 20.

The electronic apparatus according to an embodiment may provide light of a virtual image based on diffracted lights traveling in the same direction among a plurality of paths in which a plurality of incident lights respectively travel after being diffracted by the optical element.

FIG. 3 is a conceptual diagram for explaining an optical element according to an embodiment of the present disclosure.

For convenience of description, descriptions overlapping with those described with reference to FIGS. 1 and 2 will be simplified or omitted.

Referring to FIG. 3, in an embodiment, the electronic apparatus may diffract incident light by using an optical element 160. The optical element 160 may include a diffractive element configured to diffract incident light. The diffractive element may be implemented as a metasurface.

The optical element 160 may have, for example, a circularly formed pattern. The optical element 160 may have a pattern in which a certain shape is regularly repeated. That is, the optical element 160 may have a concentric circle pattern in which circular patterns having radii of different sizes are repeated.

However, the shape of the pattern of the optical element 160 illustrated in FIG. 3 is merely an example, and the technical concept of the present disclosure is not limited thereto. For example, the optical element 160 may have a rectangular pattern. The optical element 160 may have a pattern in which a rectangular shape is repeated. As another example, the optical element 160 may generally have a circular pattern but may also include some irregular patterns.

For convenience of description, the optical element 160 will be described by enlarging a third area A3 of the optical element 160. In an embodiment, the optical element 160 may include the substrate 20 and the plurality of nanostructures 11. The plurality of nanostructures 11 may constitute the optical element 10 (see FIG. 1) illustrated in FIG. 1.

The substrate 20 may have a flat plate shape. The plurality of nanostructures 11 may be positioned on the substrate 20. The plurality of nanostructures 11 may extend perpendicularly to an upper surface of the substrate 20. As illustrated in FIG. 3, the plurality of nanostructures 11 may include rectangular parallelepiped-shaped rods. The plurality of nanostructures 11 may include a plurality of rods repeated according to the first period P1. The plurality of nanostructures 11 may be positioned to be spaced apart from each other at certain intervals. The plurality of rods may include at least a first rod having a first height and a first width and a second rod having a second height and a second width. The variety of heights, widths, and spacings of the rods will be described in detail with reference to FIG. 4. The plurality of rods may further include a third rod, and a first spacing between the first rod and the second rod and a second spacing between the second rod and the third rod may differ from each other.

In FIG. 3, the heights of the plurality of nanostructures 11 are illustrated as being irregularly formed, but the technical concept of the present disclosure is not limited thereto. For example, the plurality of nanostructures 11 may be arranged in a form in which a first height and a second height are regularly repeated. As another example, the plurality of nanostructures 11 may be formed with the same height.

The plurality of nanostructures 11 included in the optical element 160 may diffract a plurality of incident lights entering the optical system to be refracted at the same angle according to the arrangement shape thereof. For example, the optical element 160 may perform a function of the input-coupling element for propagating light of a virtual image into the waveguide.

In this case, the "arrangement shape" may refer to at least one of the size, height, shape, and arrangement spacing of each of the nanostructures 11, and the size distribution by position, shape distribution by position, and spacing distribution by position of the nanostructures 11. The detailed arrangement shape of the nanostructures included in the optical element 160 may vary according to the required optical performance of the optical element 160. For example, the arrangement shape of the nanostructures may vary to control a diffraction angle for propagating incident light into the waveguide through the optical element 160, the diffraction efficiency of diffracted light, and the like.

In an embodiment, the optical element 160 may include the plurality of nanostructures 11 repeatedly positioned on a two-dimensional plane according to a period. The arrangement shape of the plurality of nanostructures 11 may be repeated based on the first period P1. The first period P1 may be designed to be greater than a wavelength of incident light. For example, for a case in which red light, green light, and blue light are incident on the optical element 160, the first period P1 of the optical element 160 may be designed to be greater than a wavelength of red light.

In an embodiment, the substrate 20 and the plurality of nanostructures 11 may be integrally formed. For example, a dielectric material may be applied on the substrate 20. An etching process may be performed such that the applied dielectric material may have a certain pattern. As a result of the etching process, the plurality of nanostructures 11 may be formed on the substrate 20.

By combining the plurality of nanostructures 11 formed in nanoscale units, the first period P1 of the optical element 160 may be designed to be large. At least, the first period P1 of the optical element 160 may be designed to be greater than the wavelength of incident light. For example, the first period P1 may be designed to be sufficiently greater than the wavelength of incident light such that the maximum diffraction order of light incident on the optical element 160 may be sufficiently large according to Equation 2. According to the method of the present disclosure, the first period P1 of the optical element 160 is designed to be at least greater than the wavelength of incident light, thereby inducing incident lights to be diffracted into various paths by the optical element 160, and causing diffracted lights, traveling in the same direction after the incident lights are diffracted, to travel into the substrate 20. The diffracted lights traveling into the substrate 20 may be emitted to the outside of the substrate 20 by the output-coupling element configured as the optical element 160, and may be viewed by a user.

FIG. 4 is a conceptual diagram for explaining in detail the design of nanostructures in an optical element, according to an embodiment of the present disclosure.

For convenience of description, descriptions overlapping with those described with reference to FIG. 3 will be simplified or omitted.

Referring to FIG. 4, the optical element may include the substrate 20 and a plurality of nanostructures.

In an embodiment, the optical element may include a plurality of nanostructures repeated according to a period. For example, the plurality of nanostructures may be arranged within the first period P1. The plurality of nanostructures may include a plurality of rods 110, 120, and 130 repeated according to the first period P1.

In an embodiment, the arrangement shapes of the plurality of nanostructures may be formed differently from each other.

For example, a first rod 110 among the plurality of nanostructures may be formed to have a first height H1 and a first thickness W1. A second rod 120 among the plurality of nanostructures may be formed to have a second height H2 and a second thickness W2. The first height H1 and the second height H2 may differ from each other. The first thickness W1 and the second thickness W2 may differ from each other. The first height H1 and the second height H2 may be the same as each other, and the first thickness W1 and the second thickness W2 may be the same as each other.

As another example, the first rod 110 may be formed as a rectangular parallelepiped-shaped pillar. The second rod 120 may be formed as a rectangular parallelepiped-shaped pillar. The shapes of the first rod 110 and the second rod 120 do not limit the technical concept of the present disclosure.

The description of a third height H3 and a third thickness W3 of a third rod 130 among the plurality of nanostructures is the same as that described with reference to the first rod 110 and the second rod 120, and will thus be omitted.

As another example, the first rod 110 and the second rod 120 among the plurality of nanostructures may be positioned to be spaced apart from each other by a first spacing I1. The second rod 120 and the third rod 130 may be positioned to be spaced apart from each other by a second spacing I2. The first spacing I1 and the second spacing I2 may differ from each other. The first spacing I1 and the second spacing I2 may be the same as each other, and the technical concept of the present disclosure is not limited thereto.

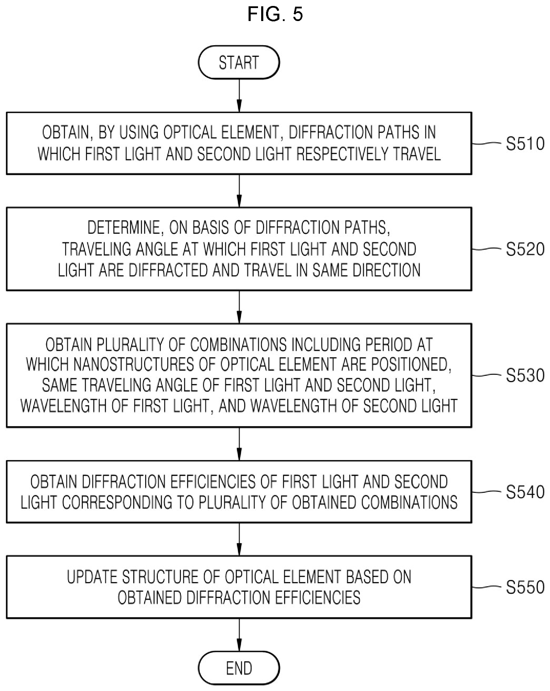

FIG. 5 is a flowchart for explaining a method of designing a single optical element for guiding light, according to an embodiment of the present disclosure.

For convenience of description, descriptions overlapping with those described with reference to FIGS. 1 to 4 will be simplified or omitted.

In operation S510, the electronic apparatus may diffract, by using a single optical element, first light and second light incident on the optical element at the same angle into a plurality of paths. The electronic apparatus may obtain, by using the single optical element, diffraction paths in which the first light and the second light respectively travel.

In an embodiment, the electronic apparatus may output the first light and the second light by using a display portion configured to output light of a virtual image. The electronic apparatus may output the first light and the second light toward the optical element. The first light and the second light are incident perpendicularly to an incident surface of the optical element.

In an embodiment, the electronic apparatus may cause the first light and the second light to be incident into the substrate by diffracting the first light and the second light using the single optical element. The optical element and the substrate constitute a waveguide, and the first light and the second light may be diffracted by the optical element and then travel into the substrate. The optical element may be positioned on the substrate.

In an embodiment, in the optical element, nanostructures may be positioned on a two-dimensional plane according to the first period. The nanostructures may include a plurality of rods repeated according to the first period. The plurality of rods may include at least a first rod having a first height and a first width and a second rod having a second height and a second width.

In an embodiment, the first light and the second light incident perpendicularly may be diffracted by the optical element. The first light may be diffracted by the optical element and then travel in a plurality of paths. The first light may travel in a plurality of paths based on a diffraction order. The diffraction order may be determined based on the value of m according to Equation 1. For example, the diffraction order may be determined based on a period at which the nanostructures of the optical element are positioned and a wavelength of incident light. As a specific example, when possible integer values of m according to Equation 1 are 1, 2, and 3, the incident light may be diffracted by the optical element and travel in three paths. The incident light may propagate into the substrate in three paths.

In an embodiment, the first light and the second light may include two of the three primary colors of light (RGB). The first light and the second light may each include one of red light, green light, and blue light. For convenience of description, the description has been made based on the relationship between the first light and the second light.

In operation S520, the electronic apparatus may determine, based on diffraction paths, a traveling angle at which the first light and the second light are diffracted and travel in the same direction.

In an embodiment, the diffraction paths may include a path in which the first light is diffracted by the optical element to travel and a path in which the second light is diffracted by the optical element to travel. The diffraction paths may include a plurality of paths in which the first light travels and may include a plurality of paths in which the second light travels.

For example, the first light may be diffracted by the optical element and then travel in three paths. The second light may be diffracted by the optical element and then travel in four paths. Because a wavelength of the first light and a wavelength of the second light differ from each other, the possible values of m according to Equation 1 may differ, and the diffraction orders may differ. Among these, for example, a traveling direction of light of a third diffraction order of the first light and a traveling direction of light of a fourth diffraction order of the second light may be the same. The diffraction order of the first light and the diffraction order of the second light in which the traveling directions coincide do not limit the technical concept of the present disclosure. The electronic apparatus may obtain a traveling angle of the light of the fourth diffraction order of the second light that is the same as a traveling angle of the light of the third diffraction order of the first light. A traveling angle of light may be determined as an angle at which the light is bent with respect to an incident surface of light incident perpendicularly to the optical element, but a method of calculating the traveling angle of light is merely an example and does not limit the technical concept of the present disclosure.

In an embodiment, a plurality of paths in which the first light is diffracted and travels may have different traveling directions from each other. A plurality of paths in which the second light is diffracted and travels may have different traveling directions from each other. The electronic apparatus may determine, from the plurality of paths in which the first light is diffracted and travels and the plurality of paths in which the second light is diffracted and travels, respective paths in which the traveling directions coincide with each other. The electronic apparatus may determine one path among the plurality of paths in which the first light is diffracted and travels and one path among the plurality of paths in which the second light is diffracted and travels, and the traveling directions of the respective determined paths may coincide. The electronic apparatus may obtain a traveling angle from the respective determined paths.

In operation S530, the electronic apparatus may obtain a plurality of combinations including the period at which the nanostructures of the optical element are positioned, the same traveling angle of the first light and the second light, a wavelength of the first light, and a wavelength of the second light.

In an embodiment, the possible values of m according to Equation 1 may be determined according to the wavelength of light incident on the optical element and the period at which the nanostructures of the optical element are positioned. That is, a diffraction order of the incident light may be determined. Furthermore, when the first light and the second light are incident on the optical element, the traveling paths of the first light and the second light after diffraction in which the traveling directions coincide may be determined from the plurality of paths in which the first light is diffracted by the optical element to travel and the plurality of paths in which the second light is diffracted by the optical element to travel. When the first light and the second light are incident on the optical element, the diffraction orders of the first light and the second light in which the traveling directions coincide may be determined based on the plurality of paths in which the first light is diffracted by the optical element to travel and the plurality of paths in which the second light is diffracted by the optical element to travel.

In an embodiment, the period at which the nanostructures of the optical element are positioned may be longer than the wavelength of the first light and the wavelength of the second light.

As a result, when the first light and the second light are incident on the optical element and diffracted by the optical element, a plurality of combinations including i) the period at which the nanostructures of the optical element are positioned, ii) the same traveling angle of the first light and the second light of the diffraction orders traveling in coinciding directions respectively after the first light and the second light are diffracted by the optical element, iii) the wavelength of the first light, and iv) the wavelength of the second light may be determined. For example, combinations expressible as Equation 3 may be determined. [Equation 3] $\left(Λ, θ, {λ}_{1}, {λ}_{2}\right)$

In Equation 3, Λ is the period at which the nanostructures of the optical element are positioned.

In Equation 3, Θ is the same traveling angle of the first light and the second light of the diffraction orders traveling in coinciding directions respectively after the first light and the second light are diffracted by the optical element. For example, the first light may be diffracted by the optical element and then travel in a plurality of paths. Light of each diffraction order of the first light travels in each path. The second light may be diffracted by the optical element and then travel in a plurality of paths. Light of each diffraction order of the second light travels in each path. For example, the traveling direction of the light of the third diffraction order of the first light may coincide with the traveling direction of the light of the fourth diffraction order of the second light. In this case, Θ may be the traveling angle of the light of the third diffraction order of the first light and also the traveling angle of the light of the fourth diffraction order of the second light.

In Equation 3, λ₁ may be the wavelength of the first light diffracted by the optical element.

In Equation 3, λ₂ may be the wavelength of the second light diffracted by the optical element.

In an embodiment, the electronic apparatus may obtain a plurality of combinations according to Equation 3. For example, even when i) the period at which the nanostructures of the optical element are positioned, iii) the wavelength of the first light, and iv) the wavelength of the second light are determined, there may be a plurality of pairs of paths in which the first light and the second light are diffracted by the optical element and then travel in the same direction.

In operation S540, the electronic apparatus may obtain diffraction efficiencies of the first light and the second light respectively corresponding to the plurality of obtained combinations.

In an embodiment, diffraction efficiency may refer to an energy conservation ratio of incident light after being diffracted by the optical element. For example, one combination among the plurality of combinations may be a combination for a case in which the light of the third diffraction order of the first light and the light of the fourth diffraction order of the second light travel in the same direction. The electronic apparatus may obtain the diffraction efficiency of the first light and the diffraction efficiency of the second light for the combination. Specifically, the electronic apparatus may obtain at least one of the diffraction efficiency of the light of the third diffraction order of the first light and the diffraction efficiency of the light of the fourth diffraction order of the second light.

In an embodiment, the electronic apparatus may determine, among the plurality of obtained combinations, a combination in which the diffraction efficiency of at least one of the first light and the second light is maximum. The electronic apparatus may determine the period at which the nanostructures of the optical element are positioned such that the diffraction efficiency of at least one of the first light and the second light is maximum.

In an embodiment, the optical element may be configured such that, based on the plurality of paths along which the first light and the second light are each diffracted and travel, at least one of the first light and the second light has the maximum diffraction efficiency when the first light and the second light travel in the same direction. For example, the light of the third diffraction order of the first light and the light of the fourth diffraction order of the second light may travel in the same direction. At least one of the diffraction efficiency of the light of the third diffraction order of the first light among the plurality of paths in which the first light is diffracted and travels and the diffraction efficiency of the light of the fourth diffraction order of the second light among the plurality of paths in which the second light is diffracted and travels may be maximum.

In an embodiment, the electronic apparatus may set a target efficiency. The electronic apparatus may determine, among the plurality of obtained combinations, a combination in which the diffraction efficiency of at least one of the first light and the second light matches a target diffraction efficiency. The electronic apparatus may determine the period at which the nanostructures of the optical element are positioned such that the diffraction efficiency of at least one of the first light and the second light matches the target efficiency.

In operation S550, the electronic apparatus may update the structure of the optical element based on the obtained diffraction efficiencies.

In an embodiment, the electronic apparatus may update the structure of the optical element such that the period at which the nanostructures of the optical element are positioned is modified based on the obtained diffraction efficiencies. The electronic apparatus may modify the period at which the nanostructures of the optical element are positioned, by updating the arrangement shape of the optical element.

The "arrangement shape" may refer to at least one of the size, shape, and arrangement spacing of each of the plurality of nanostructures, and the size distribution by position, shape distribution by position, and spacing distribution by position of the plurality of nanostructures with respect to an area in which the meta element is positioned. The period at which the nanostructures of the optical element are positioned may be modified by updating the arrangement shape of the plurality of nanostructures. The period at which the nanostructures of the optical element are positioned may be modified according to a combination of the plurality of nanostructures.

In an embodiment, the electronic apparatus may update at least one of the period at which the nanostructures of the optical element are positioned, the number of nanostructures, the height of the nanostructures, and the arrangement of the nanostructures.

In an embodiment, the electronic apparatus may determine the period at which the nanostructures of the optical element are positioned, based on a combination having the maximum diffraction efficiency among the obtained diffraction efficiencies. The electronic apparatus may determine the arrangement shape of the nanostructures to satisfy the determined period at which the nanostructures of the optical element are positioned.

In an embodiment, the electronic apparatus may determine the period at which the nanostructures of the optical element are positioned, based on a combination having the target diffraction efficiency among the obtained diffraction efficiencies. The electronic apparatus may determine the arrangement shape of the nanostructures to satisfy the determined period at which the nanostructures of the optical element are positioned.

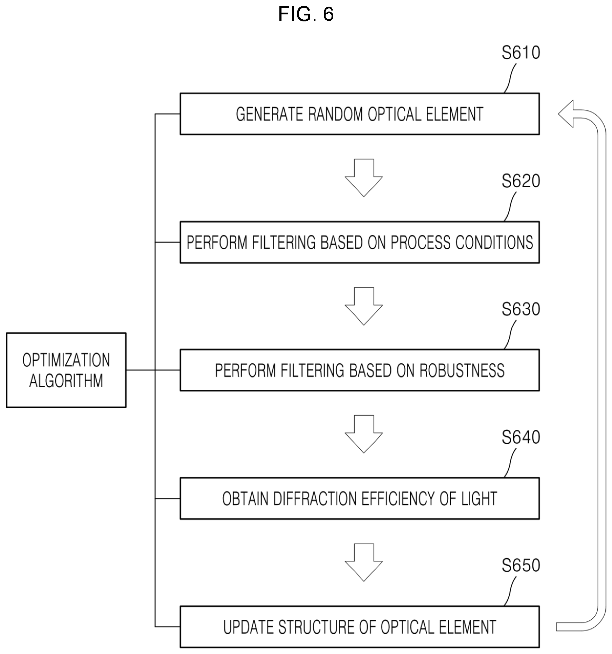

FIG. 6 is a flowchart for explaining an algorithm for optimizing a single optical element for guiding light, according to an embodiment of the present disclosure.

For reference, FIG. 6 is a diagram for explaining in detail an algorithm for optimizing an optical element, and descriptions overlapping with those described with reference to FIG. 5 will be simplified or omitted.

Referring to FIG. 6, the electronic apparatus may update the structure of the optical element by using an optimization algorithm according to operations S610 to S650. An optical element optimized by the optimization algorithm may be implemented, and an electronic apparatus including the optimized optical element may be provided.

In operation S610, the electronic apparatus may generate a random optical element. The optical element may be the diffractive element described with reference to FIGS. 3 and 4. The optical element may include a structure in which nanostructures are periodically and repeatedly installed on a two-dimensional plane. The random optical element may include an optical element in which nanostructures are installed according to a randomly set period. The random optical element may refer to an optical element virtually designed such that nanostructures are randomly installed based on a randomly set period. The arrangement of randomly installed nanostructures may be repeated according to the randomly set period.

In an embodiment, the electronic apparatus may determine the number of nanostructures based on the randomly set period. The electronic apparatus may determine the count per period of the nanostructures. In an embodiment, the electronic apparatus may determine the height of each of the nanostructures.

In an embodiment, the electronic apparatus may generate a random optical element based on a random number function. For example, the electronic apparatus may use the random number function to determine numerical values such as a period at which the nanostructures of the random optical element are positioned, and the height, spacing, and thickness of the nanostructures.

In operation S620, the electronic apparatus may filter the random optical element based on process conditions. The process conditions may include conditions that take into account the realistic design feasibility of the optical element.

For example, due to process limitations of nanostructures, nanostructures having a thickness below a threshold value may be difficult to form. The electronic apparatus may obtain thicknesses of a plurality of nanostructures included in the random optical element. The electronic apparatus may determine whether the thicknesses of the plurality of nanostructures exceed the threshold value. When the thickness of at least one of the plurality of nanostructures does not exceed the threshold value, the electronic apparatus may eliminate the random optical element including the at least one of the plurality of nanostructures. Returning to operation S610, the electronic apparatus may generate a new random optical element.

When the thickness of at least one of the plurality of nanostructures exceeds the threshold value, the electronic apparatus may determine that the process conditions are satisfied. The electronic apparatus may perform the next operation according to operation S630.

As another example, due to process limitations of nanostructures, the arrangement of nanostructures having a spacing below a threshold value may be difficult to form. The electronic apparatus may obtain spacings between the plurality of nanostructures included in the random optical element. The electronic apparatus may determine whether the spacings between the plurality of nanostructures exceed the threshold value.

When a spacing of at least one pair of adjacent nanostructures among the plurality of nanostructures does not exceed the threshold value, the electronic apparatus may determine that the process conditions are not satisfied. The electronic apparatus may eliminate the random optical element including the at least one pair of adjacent nanostructures among the plurality of nanostructures. Returning to operation S610, the electronic apparatus may generate a new random optical element.

When the spacing of at least one pair of adjacent nanostructures among the plurality of nanostructures exceeds the threshold value, the electronic apparatus may determine that the process conditions are satisfied. The electronic apparatus may perform the next operation according to operation S630.

In an embodiment, the process conditions may be set by a user. In addition, a threshold value for the thickness or spacing of nanostructures may also be set by the user, and this does not limit the technical concept of the present disclosure.

In operation S630, the electronic apparatus may filter the random optical element based on robustness. In the present disclosure, robustness may refer to the ability of the optical system or the optical element to remain robust or stable against changes or external influences during a process. Robustness may refer to the ability to stably maintain the function of the optical element despite small perturbations, such that small structural changes in the optical element occurring during the process do not cause critical differences in the diffraction angle, diffraction order, and the like of incident light diffracted by the optical element.

In an embodiment, the electronic apparatus may obtain a comparison optical element by applying a small perturbation to the random optical element. The small perturbation may refer to a minute structural change in the optical element. For example, the random optical element may include a nanostructure having a height of 10 nm, and the comparison optical element to which a small perturbation has been applied may include a nanostructure having a height of 10.1 nm. The degree of minuteness of the perturbation has been described as 1 % as an example, but the degree of minuteness may be set differently depending on the user's intent, the performance of the optimization algorithm, and the required accuracy, and does not limit the technical concept of the present disclosure.

The electronic apparatus may cause light to be incident on the random optical element and the comparison optical element, and may obtain the diffraction efficiency, diffraction angle, and the like of the incident light. Because the comparison optical element is obtained by applying a small perturbation to the random optical element, the diffraction efficiency and diffraction angle of light diffracted by the comparison optical element may be similar to the diffraction efficiency and diffraction angle of light diffracted by the random optical element.

The electronic apparatus may obtain a difference between the diffraction efficiency and diffraction angle of the light diffracted by the comparison optical element and the diffraction efficiency and diffraction angle of the light diffracted by the random optical element. The electronic apparatus may determine whether the obtained difference in diffraction efficiency and diffraction angle exceeds a threshold value.

When the obtained difference in diffraction efficiency and diffraction angle exceeds the threshold value, the electronic apparatus may determine that the robustness of the random optical element is not secured. The electronic apparatus may eliminate the random optical element lacking robustness. Returning to operation S610, the electronic apparatus may generate a new random optical element.

When the obtained difference in diffraction efficiency and diffraction angle does not exceed the threshold value, the electronic apparatus may determine that the robustness of the random optical element is secured. The electronic apparatus may perform the next operation according to operation S640.

In operation S640, the electronic apparatus may obtain the diffraction efficiency of light incident on the random optical element. The electronic apparatus may diffract, by using the random optical element, first light and second light incident on the random optical element at the same angle into a plurality of paths. The electronic apparatus may obtain, by using the random optical element, diffraction paths in which the first light and the second light respectively travel.

The diffraction paths may include a plurality of paths in which the first light incident on the random optical element is diffracted and travels and a plurality of paths of the second light incident on the random optical element. The electronic apparatus may determine, based on the diffraction paths, a traveling angle at which the first light and the second light are diffracted and travel in the same direction.

The electronic apparatus may obtain a plurality of combinations including a period at which the nanostructures of the optical element are positioned, the same traveling angle of the first light and the second light, a wavelength of the first light, and a wavelength of the second light. The electronic apparatus may obtain diffraction efficiencies of the first light and the second light respectively corresponding to the plurality of obtained combinations. The electronic apparatus may obtain diffraction efficiencies of lights of diffraction orders traveling in a first direction after the first light is diffracted by the random optical element, and diffraction efficiencies of lights of diffraction orders traveling in the first direction after the second light is diffracted by the random optical element.

Operation S640 may include those described using operations S510 to S540 described with reference to FIG. 5, and overlapping descriptions have been simplified or omitted.

In operation S650, the electronic apparatus may update the structure of the optical element. The electronic apparatus may update the structure of the optical element based on the obtained diffraction efficiency of light. For example, the electronic apparatus may change the period at which the nanostructures of the optical element are positioned, such that the obtained diffraction efficiency of light is maximum.

The description related to operation S650 is the same as that described with reference to operation S550 of FIG. 5, and overlapping descriptions will be simplified or omitted.

In an embodiment, the operations according to operations S610 to S650 may be repeatedly performed until the structure of the random optical element is optimized. For example, when the electronic apparatus updates the structure of the random optical element based on the diffraction efficiency of light in operation S650 but does not change the structure of the random optical element, the repeated performance of operations S610 to S650 may be stopped.

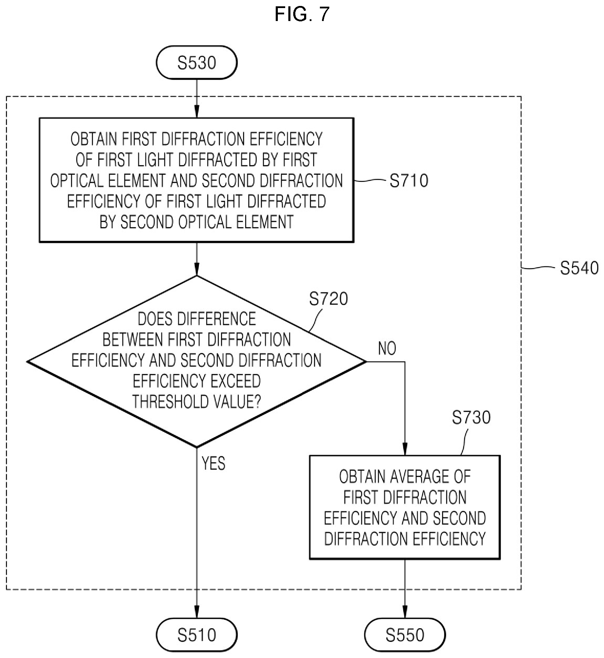

FIG. 7 is a flowchart for explaining a method of securing robustness to optimize an optical element, according to an embodiment of the present disclosure.

Descriptions overlapping with those described with reference to FIGS. 5 and 6 will be simplified or omitted. Specifically, the description illustrated in FIG. 7 provides a detailed explanation of operation S540, and also provides a detailed explanation of operations S630 and S640 of FIG. 6.

Referring to FIG. 7, operation S540 of FIG. 5 may include operations S710, S720, and S730.

In an embodiment, the optical element may include a first optical element and a second optical element. The first optical element may be a reference optical element, and the second optical element may refer to an optical element to which a perturbation has been applied to nanostructures of the first optical element. The first optical element may correspond to the random optical element described with reference to FIG. 6. The second optical element may correspond to the comparison optical element described with reference to FIG. 6.

In operation S710, the electronic apparatus may obtain a first diffraction efficiency of first light diffracted by the first optical element and a second diffraction efficiency of first light diffracted by the second optical element. For example, the first light may be diffracted into a plurality of paths by the first optical element. The electronic apparatus may obtain a first diffraction efficiency of light of a fourth diffraction order of the first light diffracted by the first optical element. The electronic apparatus may obtain a second diffraction efficiency of light of a fourth diffraction order of the first light diffracted by the second optical element.

For convenience of description, the description has been made based on the first light, and the same applies to the second light.

In operation S720, the electronic apparatus may determine whether a difference between the first diffraction efficiency and the second diffraction efficiency exceeds a threshold value.

When the obtained difference in diffraction efficiency exceeds the threshold value, the electronic apparatus may determine that the robustness of the optical element is not secured. The electronic apparatus may change the structure of the optical element. The electronic apparatus may eliminate the optical element lacking robustness. Returning to operation S510, the electronic apparatus may re-obtain diffraction paths in which the first light and the second light respectively travel based on a new single optical element.

When the obtained difference in diffraction efficiency does not exceed the threshold value, the electronic apparatus may determine that the robustness of the optical element is secured. In operation S730, the electronic apparatus may obtain an average of the first diffraction efficiency and the second diffraction efficiency. Subsequently, operation S550 may be performed. The electronic apparatus may update the structure of the optical element based on the obtained average of the first diffraction efficiency and the second diffraction efficiency.

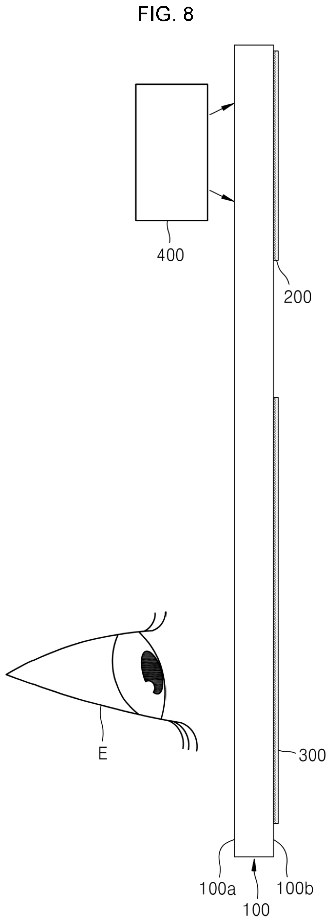

FIG. 8 is a schematic diagram of an electronic apparatus including an optical element, according to an embodiment of the present disclosure.

Referring to FIG. 8, the electronic apparatus according to an embodiment may include the waveguide 100 according to the aforementioned embodiments. The waveguide 100 may include the input-coupling element 200 and the output-coupling element 300. The diagram illustrates a case in which the output-coupling element 300 is provided on a second surface 100b of the waveguide 100, but the output-coupling element 300 may be provided on a first surface 100a of the waveguide 100 or on both surfaces of the waveguide 100 (i.e., the first surface 100a and the second surface 100b). The waveguide 100 may further include an expanding element configured to perform pupil expansion on input light. The expanding element may be positioned between the input-coupling element 200 and the output-coupling element 300, may be positioned to overlap with the output-coupling element 300 in a partial area, or may be positioned to overlap with the output-coupling element 300 in the same area. The input-coupling element 200, the output-coupling element 300, or the expanding element may be the optical element according to the aforementioned embodiments. The optical element may include a meta element, and the meta element is an element having a metasurface structured in a pattern smaller than a wavelength band of incident light (i.e., sub-wavelength), and may include, for example, a metagrating or a metalens having a pattern with a size smaller than the wavelength band of incident light, but is not limited thereto.

In an embodiment, the waveguide 100 may include a single substrate 20 (see FIG. 1) configured to guide a plurality of lights.

In an embodiment, the input-coupling element 200 may be positioned on the waveguide 100. The input-coupling element 200 may be configured to allow external light to be incident onto the substrate. The input-coupling element 200 may be configured as the optical element according to the aforementioned embodiments. The input-coupling element 200 may be configured to diffract a plurality of incident lights to travel in the same direction. The plurality of diffracted incident lights may propagate into the waveguide 100.

In an embodiment, the output-coupling element 300 may be positioned on the waveguide 100. The output-coupling element 300 may be configured to allow external light to be output from the substrate. The output-coupling element 300 may be configured as the optical element according to the aforementioned embodiments. The output-coupling element 300 may be configured to diffract a plurality of incident lights to exit from the substrate. The plurality of diffracted incident lights may propagate to the outside of the substrate.

In an embodiment, at least one of the input-coupling element 200 and the output-coupling element 300 may include a single optical element. The optical element may include an element in which nanostructures are positioned on a two-dimensional plane according to a first period. The optical element may be configured to diffract first light and second light incident at the same angle into a plurality of paths. The optical element may be the optical element according to the aforementioned embodiments. The first light and the second light may each include one of red light, green light, and blue light.

The electronic apparatus may further include a display portion 400 configured to emit light of an image (e.g., a virtual object). Light emitted by the display portion 400 is output to a target area through the waveguide 100. The input-coupling element 200 and the output-coupling element 300 may be configured to guide, to the target area, light output from the display portion 400.

Information processing and image formation for the display portion 400 may be performed directly by a computer of the electronic apparatus, or the electronic apparatus may be connected to an external electronic device, such as a smartphone, a tablet, a computer, a laptop, or any other intelligent (smart) device, to be performed by the external electronic device. Signal transmission between the electronic apparatus and the external electronic device may be performed through wired communication and/or wireless communication. The electronic apparatus may receive power from at least one of a builtin power source (rechargeable battery), an external device, and an external power source.

In an embodiment, the electronic apparatus may include an augmented reality device. In the present disclosure, the "augmented reality device" refers to an apparatus capable of expressing augmented reality, encompassing not only augmented reality glasses worn on the face of a user, but also a head-mounted display (HMD), an augmented reality helmet, and a head-up display (HUD) worn on the head.

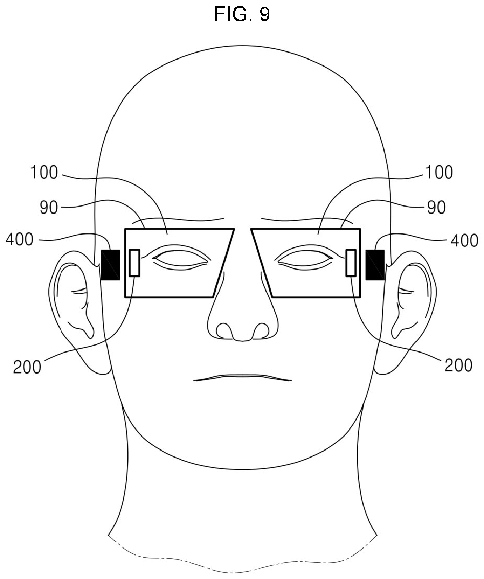

FIG. 9 is a schematic diagram of an augmented reality device according to an embodiment.

Referring to FIG. 9, the augmented reality device may use the electronic apparatus described with reference to FIG. 8 as a left-eye element and a right-eye element instead of lenses. That is, for each of the left-eye element and the right-eye element, the augmented reality device may include the input-coupling element 200, the output-coupling element 300 (see FIG. 8), the waveguide 100, and the display portion 400 according to the aforementioned embodiments. Each waveguide 100 may be fixed to a frame 90. Each display portion 400 may be positioned near a temple of a user's head and fixed to the frame 90. Each waveguide 100 includes the input-coupling element 200 configured to input light from the display portion 400 to the waveguide 100. Each waveguide 100 is positioned such that an area including the output-coupling element 300 (see FIG. 8) is positioned to face a corresponding eye of the user (wearer). The display portion 400 is positioned to face the input-coupling element 200.

A method according to an embodiment of the present disclosure may include obtaining, by using an optical element in which nanostructures are positioned on a two-dimensional plane according to a first period, diffraction paths in which first light and second light respectively travel by diffracting the first light and the second light at a same angle into a plurality of paths, the first light and the second light being incident on the optical element. The method may include determining, based on the diffraction paths, a traveling angle at which the first light and the second light are diffracted and travel in a same direction. The method may include obtaining a plurality of combinations including the first period, the traveling angle, a wavelength of the first light, and a wavelength of the second light. The method may include obtaining diffraction efficiencies of the first light and the second light respectively corresponding to the plurality of obtained combinations. The method may include updating a structure of the optical element based on the obtained diffraction efficiencies.

In an embodiment, the first light and the second light may each include one of red light, green light, and blue light.

In an embodiment, the nanostructures may include a plurality of rods repeated according to the first period. The plurality of rods may include at least a first rod having a first height and a first width and a second rod having a second height and a second width.

In an embodiment, the plurality of rods may further include a third rod. A first spacing between the first rod and the second rod and a second spacing between the second rod and the third rod may differ from each other.

In an embodiment, the obtaining of the diffraction efficiencies of the first light and the second light may include determining, among the plurality of obtained combinations, a combination in which the diffraction efficiency of at least one of the first light and the second light is maximum.

In an embodiment, the obtaining of the diffraction efficiencies of the first light and the second light may include setting a target efficiency. The obtaining of the diffraction efficiencies of the first light and the second light may include determining, among the plurality of obtained combinations, a combination in which the diffraction efficiency of at least one of the first light and the second light matches the target efficiency.

In an embodiment, the updating of the structure of the optical element may include updating at least one of the first period of the optical element, a number of nanostructures, the height of the nanostructures, and the arrangement of the nanostructures.

In an embodiment, the optical element may include a first optical element and a second optical element to which a perturbation has been applied to nanostructures of the first optical element. The obtaining of the diffraction efficiencies of the first light and the second light may include obtaining an average of a first diffraction efficiency of the first light diffracted by the first optical element and a second diffraction efficiency of the first light diffracted by the second optical element.

In an embodiment, the method may further include, when a difference between the first diffraction efficiency and the second diffraction efficiency exceeds a threshold value, changing the structure of the optical element.

In an embodiment, the method may further include, when the difference between the first diffraction efficiency and the second diffraction efficiency does not exceed the threshold value, updating the structure of the optical element based on the average of the first diffraction efficiency and the second diffraction efficiency.

In an embodiment, the first period may be longer than the wavelength of the first light and the wavelength of the second light.

An electronic apparatus according to an embodiment of the present disclosure may include memory, at least one processor, a waveguide, an input-coupling element, and an output-coupling element. The memory may store one or more instructions. The at least one processor may be configured to execute the one or more instructions stored in the memory. The waveguide may include a substrate configured to guide a plurality of lights. The input-coupling element may be positioned on the substrate and configured to allow external light to be incident onto the substrate. The output-coupling element may be positioned on the substrate and configured to allow the external light to be output from the substrate. At least one of the input-coupling element and the output-coupling element may include an optical element. The optical element may be configured such that nanostructures are positioned on a two-dimensional plane according to a first period and may be configured to diffract first light and second light into a plurality of paths, the first light and the second light being incident at a same angle. The at least one processor may be further configured to execute the one or more instructions to obtain, by using the optical element, diffraction paths in which the first light and the second light respectively travel. The at least one processor may be further configured to determine, based on the diffraction paths, a traveling angle at which the first light and the second light are diffracted and travel in a same direction. The at least one processor may be further configured to obtain a plurality of combinations including the first period, the traveling angle, a wavelength of the first light, and a wavelength of the second light. The at least one processor may be further configured to obtain diffraction efficiencies of the first light and the second light respectively corresponding to the plurality of obtained combinations. The at least one processor may be further configured to update a structure of the optical element based on the obtained diffraction efficiencies.

In an embodiment, the first light and the second light may each include one of red light, green light, and blue light.

In an embodiment, the optical element may be configured such that, based on the plurality of paths along which the first light and the second light are each diffracted and travel, at least one of the first light and the second light has the maximum diffraction efficiency when the first light and the second light travel in the same direction.

In an embodiment, the nanostructures may include a plurality of rods repeated according to the first period. The plurality of rods may include at least a first rod having a first height and a first width and a second rod having a second height and a second width.

In an embodiment, the plurality of rods may further include a third rod. A first spacing between the first rod and the second rod and a second spacing between the second rod and the third rod may differ from each other.

In an embodiment, the first period may be longer than the wavelength of the first light and the wavelength of the second light.

In an embodiment, the electronic apparatus may further include a display portion configured to output light of an image. The input-coupling element and the output-coupling element may be configured to guide the light output from the display portion to a target area, and the target area may include an eye motion box of a user.

In an embodiment, the electronic apparatus may further include a left-eye element and a right-eye element corresponding to a left eye and a right eye of the user. Each of the left-eye element and the right-eye element may include a display portion, a waveguide, an input-coupling element, and an output-coupling element.

A computer-readable recording medium having recorded thereon a program for executing, on a computer, a method according to an embodiment of the present disclosure may be provided.

A machine-readable storage medium may be provided in the form of a non-transitory storage medium. In this regard, the "non-transitory storage medium" simply means that the storage medium is a tangible apparatus and does not include a signal (e.g., an electromagnetic wave), but this term does not differentiate between where data is semi-permanently stored in the storage medium and where the data is temporarily stored in the storage medium. For example, the "non-transitory storage medium" may include a buffer in which data is temporarily stored.

According to an embodiment, the method according to various embodiments provided in the present document may be provided by being included in a computer program product. The computer program product may be traded as a product between a seller and a buyer. The computer program product may be distributed in the form of a machine-readable storage medium (e.g., compact disc read-only memory (CD-ROM)), or distributed (e.g., downloaded or uploaded) through an application store, or directly or online between two user devices (e.g., smart phones). In the case of online distribution, at least a portion of a computer program product (e.g., a downloadable application) may be temporarily stored in a machine-readable storage medium such as memory of a manufacturer's server, an application store's server, or a relay server, or may be temporarily generated.

## Claims

1. A method comprising:
obtaining, by using an optical element in which nanostructures are positioned on a two-dimensional plane according to a first period, diffraction paths in which first light and second light respectively travel by diffracting the first light and the second light at a same angle into a plurality of paths, the first light and the second light being incident on the optical element;
determining, based on the diffraction paths, a traveling angle at which the first light and the second light are diffracted and travel in a same direction;
obtaining a plurality of combinations comprising the first period, the traveling angle, a wavelength of the first light, and a wavelength of the second light;
obtaining diffraction efficiencies of the first light and the second light respectively corresponding to the plurality of obtained combinations; and
updating a structure of the optical element based on the obtained diffraction efficiencies.

2. The method of claim 1, wherein the first light and the second light each comprise one of red light, green light, and blue light.

3. The method of any one of claims 1 and 2, wherein the nanostructures comprise a plurality of rods repeated according to the first period, and the plurality of rods comprise at least a first rod having a first height and a first width and a second rod having a second height and a second width.

4. The method of claim 3, wherein the plurality of rods further comprise a third rod, and
a first spacing between the first rod and the second rod and a second spacing between the second rod and the third rod differ from each other.

5. The method of any one of claims 1 to 4, wherein the obtaining of the diffraction efficiencies of the first light and the second light comprises determining, among the plurality of obtained combinations, a combination in which the diffraction efficiency of at least one of the first light and the second light is maximum.

6. The method of any one of claims 1 to 4, wherein the obtaining of the diffraction efficiencies of the first light and the second light comprises:
setting a target efficiency; and
determining, among the plurality of obtained combinations, a combination in which the diffraction efficiency of at least one of the first light and the second light matches the target efficiency.

7. The method of any one of claims 1 to 6, wherein the updating of the structure of the optical element comprises updating at least one of the first period of the optical element, a number of nanostructures, the height of the nanostructures, and the arrangement of the nanostructures.

8. The method of any one of claims 1 to 7, wherein the first period is longer than the wavelength of the first light and the wavelength of the second light.

9. An electronic apparatus comprising:
memory storing one or more instructions;
at least one processor configured to execute the one or more instructions stored in the memory;
a waveguide (100) comprising a substrate configured to guide a plurality of lights;
an input-coupling element (200) positioned on the substrate and configured to allow external light to be incident onto the substrate; and
an output-coupling element (300) positioned on the substrate and configured to allow the external light to be output from the substrate,
wherein at least one of the input-coupling element and the output-coupling element comprises an optical element, the optical element being configured such that nanostructures are positioned on a two-dimensional plane according to a first period and diffracts first light and second light into a plurality of paths, the first light and the second light being incident at a same angle, and
the at least one processor is configured to execute the one or more instructions to:
obtain, by using the optical element, diffraction paths in which the first light and the second light respectively travel;
determine, based on the diffraction paths, a traveling angle at which the first light and the second light are diffracted and travel in a same direction;
obtain a plurality of combinations comprising the first period, the traveling angle, a wavelength of the first light, and a wavelength of the second light;
obtain diffraction efficiencies of the first light and the second light respectively corresponding to the plurality of obtained combinations; and
update a structure of the optical element based on the obtained diffraction efficiencies.

10. The electronic apparatus of claim 9, wherein the first light and the second light each comprise one of red light, green light, and blue light.

11. The electronic apparatus of any one of claims 9 to 10, wherein the optical element is configured such that, based on the plurality of paths along which the first light and the second light are each diffracted and travel, when the first light and the second light travel in the same direction, at least one of the first light and the second light has a maximum diffraction efficiency.

12. The electronic apparatus of any one of claims 9 to 11, wherein the nanostructures comprise a plurality of rods repeated according to the first period, and
the plurality of rods comprise at least a first rod having a first height and a first width, and a second rod having a second height and a second width.

13. The electronic apparatus of claim 12, wherein the plurality of rods further comprise a third rod, and
a first spacing between the first rod and the second rod and a second spacing between the second rod and the third rod differ from each other.

14. The electronic apparatus of any one of claims 9 to 13, wherein the first period is longer than the wavelength of the first light and the wavelength of the second light.

15. A computer-readable recording medium having recorded thereon a program for executing, on a computer, the method of any one of claims 1 to 8.
